(19) Europäisches Patentamt / European Patent Office / Office européen des brevets

(11) **EP 4 502 102 A1**

(12) **EUROPEAN PATENT APPLICATION**
published in accordance with Art. 153(4) EPC

(43) Date of publication:
05.02.2025 Bulletin 2025/06

(21) Application number: 23775052.6

(22) Date of filing: 23.03.2023

(51) International Patent Classification (IPC):
$C09K\ 5/14^{(2006.01)}$  $C08K\ 3/01^{(2018.01)}$
$C08K\ 5/01^{(2006.01)}$  $C08L\ 83/04^{(2006.01)}$
$C08L\ 101/00^{(2006.01)}$  $C09K\ 5/10^{(2006.01)}$

(52) Cooperative Patent Classification (CPC):
C08K 3/01; C08K 5/01; C08L 83/04; C08L 101/00;
C09K 5/10; C09K 5/14

(86) International application number:
PCT/JP2023/011639

(87) International publication number:
WO 2023/182459 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022 JP 2022048360

(71) Applicant: Sekisui Polymatech Co., Ltd.
Saitama-city, Saitama 338-0837 (JP)

(72) Inventors:
• KITADA, Gaku
Saitama-city
Saitama 338-0837 (JP)
• KANEKO, Toshiki
Saitama-city
Saitama 338-0837 (JP)
• MIYAMOTO, Kensho
Saitama-city
Saitama 338-0837 (JP)

(74) Representative: Ter Meer Steinmeister & Partner
Patentanwälte mbB
Nymphenburger Straße 4
80335 München (DE)

(54) **THERMALLY-CONDUCTIVE COMPOSITION, TWO-PART THERMALLY-CONDUCTIVE MATERIAL, DELIVERY FORM OF THERMALLY-CONDUCTIVE COMPOSITION, THERMALLY-CONDUCTIVE MEMBER, BATTERY MODULE, AND METHOD FOR MANUFACTURING DELIVERY FORM OF THERMALLY-CONDUCTIVE COMPOSITION**

(57) The thermally conductive composition of the present invention includes a liquid polymer, a thermally conductive filler and a structural viscosity imparting agent, wherein the thermally conductive composition has a viscosity ratio ($\eta 1/\eta 3$) between a viscosity $\eta 1$ measured by a rheometer under conditions of a measurement temperature of 25°C and a shear rate of 0.00158 (1/s) and a viscosity $\eta 3$ measured by a rheometer under conditions of a measurement temperature of 25°C and a shear rate of 0.0501 (1/s) of more than 8. The present invention can provide a thermally conductive composition in which settle down of the thermally conductive filler is suppressed in storage and which has excellent handling properties in use.

Fig. 1

## Description

Technical Field

The present invention relates to a thermally conductive composition, a two-part curable thermally conductive material, a supply form of a thermally conductive composition, a thermally conductive member, a battery module, and a method for producing the supply form of a thermally conductive composition.

Background Art

Cured products formed by filling a thermally conductive composition between a heating element and a heat sink and then curing the composition are used as a thermally conductive member that transfers the heat generated by the heating element to the heat sink. Thermally conductive compositions are flowable, and thus any gap between a heating element and a heat sink can be filled with the thermally conductive composition. Therefore, the thermally conductive member formed can reliably fill the gap between the heating element and the heat sink even if the gap is irregular, and thus is used as a thermally conductive spacer.

For example, as disclosed in Patent Literature 1, thermally conductive members are known to be used in a battery module as a spacer. A thermally conductive member is placed between a battery cell, which is a heating element, and a module housing, which is a heat sink, and serves to discharge the heat of the battery cell to the outside. The thermally conductive member is also placed between battery cells to secure them and keep them apart.

A thermally conductive composition including organopolysiloxane and a thermally conductive filler has been frequently used as a thermally conductive composition for forming a thermally conductive member. Generally, to improve heat dissipation, it is necessary to increase the content of the thermally conductive filler. However, if the content of the thermally conductive filler is increased, the viscosity of the thermally conductive composition increases, and this worsens handling properties. For example, if the viscosity of the thermally conductive composition increases, it may be difficult to dispense it from a dispenser or the like. Or, in the operation of compressing coating formed by putting a thermally conductive composition in the space between a heating element and a heat sink, handling properties may be deteriorated and for example, load may be increased. For this reason, reducing the viscosity of thermally conductive compositions has been widely considered. Meanwhile, reduction in the viscosity of thermally conductive compositions may cause the problem of settle down of thermally conductive filler in long term storage.

To solve the above problem, Patent Literature 2 discloses that a silica filler is mixed in a thermally conductive silicone grease composition comprising liquid organopolysiloxane, organopolysiloxane specified by a specific formula and a thermally conductive filler.

Citation List

Patent Literature

PTL 1: International Publication No. 2018/173860
PTL 2: JP 2012-7057 A

Summary of Invention

Technical Problem

However, adding silica filler was not sufficient to suppress the settle down of thermally conductive filler while achieving excellent handling properties, and thus further improvement was required.

Accordingly, an object of the present invention is to provide a thermally conductive composition comprising a liquid polymer and a thermally conductive filler, in which settle down of the thermally conductive filler is suppressed in storage and which has excellent handling properties in use.

Technical Solution

The present inventors have conducted intensive studies and have found that the above problem can be solved by a thermally conductive composition comprising a liquid polymer, a thermally conductive filler and a structural viscosity imparting agent, which has a viscosity ratio above a certain level measured by a rheometer under specific conditions.

That is, the present invention provides the following [1] to [22].
[1] A thermally conductive composition comprising a liquid polymer, a thermally conductive filler and a structural viscosity imparting agent, the thermally conductive composition having a viscosity ratio ($\eta$1/$\eta$3) between a viscosity $\eta$1 measured by a rheometer under conditions of a measurement temperature of 25°C and a shear rate of 0.00158 (1/s) and a viscosity $\eta$3 measured by a rheometer under conditions of a measurement temperature of 25°C and a shear rate of 0.0501 (1/s) of more than 8.
[2] The thermally conductive composition according to [1] above, wherein the liquid polymer is organopolysiloxane.
[3] The thermally conductive composition according to [1] or [2] above, wherein the liquid polymer is an addition reaction-curable silicone.
[4] The thermally conductive composition according to [1] above, wherein the liquid polymer is alkenyl group-containing organopolysiloxane.
[5] The thermally conductive composition according to [1] above, wherein the liquid polymer is hydrogen organopolysiloxane.
[6] The thermally conductive composition according to any of [1] to [5] above, wherein the structural viscosity imparting agent is a hydrocarbon compound that is solid at 25°C.
[7] The thermally conductive composition according to any of [1] to [6] above, wherein the structural viscosity imparting agent is a hydrocarbon compound having a melting point of more than 25°C and 120°C or less.
[8] The thermally conductive composition according to any of [1] to [7] above, wherein a content of the structural viscosity imparting agent is 0.5 to 20 parts by mass based on 100 parts by mass of the liquid polymer.
[9] The thermally conductive composition according to any of [1] to [7] above, further comprising a compatibilizer.
[10] The thermally conductive composition according to [9] above, wherein the compatibilizer is a hydrocarbon compound that is liquid at 25°C.
[11] The thermally conductive composition according to [10] above, wherein the hydrocarbon compound that is liquid at 25°C is a mixture of saturated hydrocarbons having 10 to 50 carbon atoms.
[12] The thermally conductive composition according to any of [9] to [11] above, wherein a content of the compatibilizer is 50 parts by mass or less based on 100 parts by mass of the liquid polymer.
[13] The thermally conductive composition according to any of [9] to [12] above, wherein the content of the compatibilizer is not less than twice and not more than 10 times the content of the structural viscosity imparting agent.
[14] The thermally conductive composition according to any of [9] to [13] above, wherein the content of the structural viscosity imparting agent is X part(s) by mass or more, which is represented by the following equation (1), based on 100 parts by mass of the liquid polymer:

$$X \text{ (part(s) by mass)} = 0.5 + w \times 0.05 \qquad \text{equation (1)}$$

wherein, w represents the content (part(s) by mass) of the compatibilizer based on 100 parts by mass of the liquid polymer.
[15] A two-part curable thermally conductive material comprising: a first part comprising the thermally conductive composition according to [4] above, and a second part comprising the thermally conductive composition according to [5] above.
[16] A supply form of a thermally conductive composition, comprising a container filled with the thermally conductive composition according to any of [1] to [14] above.
[17] A supply form of a two-part curable thermally conductive material, comprising: a first container filled with a first part comprising the thermally conductive composition according to [4] above, and a second container filled with a second part comprising the thermally conductive composition according to [5] above.
[18] The supply form of a thermally conductive composition according to [16] above, wherein the supply form is used in such a manner that the thermally conductive composition is supplied to an application apparatus from the container.
[19] The supply form of a two-part curable thermally conductive material according to [17] above, wherein the supply form is used in such a manner that the thermally conductive composition is supplied to an application apparatus from the container.
[20] A thermally conductive member prepared by curing the thermally conductive composition according to any of [1] to [14] above, or the two-part curable thermally conductive material according to [15] above.
[21] A battery module comprising: a spacer comprising the thermally conductive member according to [20] above; a plurality of battery cells; and a module housing that houses the plurality of battery cells, wherein the spacer is arranged in the module housing.
[22] A method for producing a supply form of a thermally conductive composition, the method comprising performing: a step of preparing a mixture comprising a liquid polymer, a thermally conductive filler and a structural viscosity imparting agent; a step of heating the mixture; and a step of cooling the mixture to adjust a viscosity ratio ($\eta1/\eta3$) between a viscosity $\eta1$ measured by a rheometer under conditions of a measurement temperature of 25°C and a shear rate of 0.00158 (1/s) and a viscosity $\eta3$ measured by a rheometer under conditions of a measurement temperature of 25°C and a shear rate of 0.0501 (1/s) to more than 8.

Advantageous Effects of Invention

The present invention can provide a thermally conductive composition which can suppress settle down of thermally conductive filler in storage and which has excellent handling properties in use.

Brief Description of Drawings

[Fig. 1] Fig. 1 is a perspective view illustrating a typical structure of a battery module.
[Fig. 2] Fig. 2 is a perspective view illustrating a typical structure of a battery cell in a battery module.

Description of Embodiments

[Thermally conductive composition]

In the following, the thermally conductive composition of the present invention will be described in detail.
The thermally conductive composition of the present invention comprises a liquid polymer, a thermally conductive filler and a structural viscosity imparting agent, and has a viscosity ratio ($\eta1/\eta3$) between a viscosity $\eta1$ measured by a rheometer under conditions of a measurement temperature of 25°C and a shear rate of 0.00158 (1/s) and a viscosity $\eta3$ measured by a rheometer under conditions of a measurement temperature of 25°C and a shear rate of 0.0501 (1/s) of more than 8.

<Viscosity ratio>

The thermally conductive composition of the present invention has a viscosity ratio ($\eta1/\eta3$) measured by a rheometer of more than 8. When the viscosity ratio ($\eta1/\eta3$) is 8 or less, the thermally conductive filler is likely to settle down when the thermally conductive composition is stored, and handling properties tend to be deteriorated when used.
To suppress settle down of the thermally conductive filler in storage and improve handling properties in use, the thermally conductive composition has a viscosity ratio ($\eta1/\eta3$) measured by a rheometer of preferably more than 10, more preferably 15 or more, and even more preferably 20 or more. The upper limit of the viscosity ratio ($\eta1/\eta3$) is not particularly limited, and for example 100.
Although the reason why adjusting the viscosity ratio ($\eta1/\eta3$) as described above leads to suppression of the settle down of the thermally conductive filler when a thermally conductive composition is stored and improves its handling properties when used is not clear, the reason is assumed to be as follows.
Both viscosity $\eta1$ and viscosity $\eta3$ represent a viscosity in the low shear rate region. When a thermally conductive composition has a viscosity ratio ($\eta1/\eta3$) of more than 8, its viscosity changes significantly relative to the change in the shear rate in the low shear rate region. In other words, the slope in a graph illustrating the relation between the shear rate (the horizontal axis) and the viscosity (the vertical axis) increases. This means that in storage, i.e., when the shear rate is very small, the thermally conductive composition has high viscosity, and thus the settle down of the thermally conductive filler is suppressed. When the thermally conductive composition is used after storage, the shear rate is relatively increased, because, for example, the thermally conductive composition is discharged from a dispenser or coating is compressed. At that stage, the viscosity of the thermally conductive composition is effectively reduced as the shear rate is increased, and thus handling properties are improved.
In the present invention, it is important to adjust the viscosity ratio ($\eta1/\eta3$) as described above, and thus individual values of viscosity $\eta1$ and viscosity $\eta3$ are not particularly limited. However, to suppress settle down of the thermally conductive filler, the thermally conductive composition has a viscosity $\eta1$ of, for example, 3,000 (Pa · s) or more, preferably 5,000 (Pa · s) or more, more preferably 10,000 (Pa · s) or more, even more preferably 20,000 (Pa · s) or more. The upper limit of viscosity $\eta1$ is not particularly limited, and for example is 100,000 (Pa · s).
Furthermore, when the viscosity measured by a rheometer under conditions of a measurement temperature of 25°C and a shear rate of 3.16 (1/s) is defined as viscosity $\eta2$, the viscosity ratio ($\eta1/\eta2$) is preferably 30 or more, more preferably 50 or more, even more preferably 60 or more, and even more preferably 70 or more from the viewpoint of the improvement in handling properties.

The thermally conductive composition has a viscosity $\eta 2$ of preferably 350 (Pa · s) or less, more preferably 250 (Pa · s) or less and even more preferably 150 (Pa · s) or less from the viewpoint of the improvement in handling properties. The lower limit of viscosity $\eta 2$ is not limited, and for example, is 50.

Viscosity $\eta 1$, viscosity $\eta 2$ and viscosity $\eta 3$ of the thermally conductive composition are measured by a rheometer at 25°C. When viscosity is measured by a rheometer, the thermally conductive composition is heated and then cooled to room temperature (25°C) and then the viscosity is measured, in order to assess the viscosity while eliminating impact of shear when the sample is set on the measurement tool. At that stage the heating temperature is the melting point or more of the structural viscosity imparting agent, and is preferably the melting point +50°C or less. The heating temperature may be set in the range of 35 to 170°C. Details of measurement conditions of the rheometer will be described in Examples.

Viscosity $\eta 1$, viscosity $\eta 2$ and viscosity $\eta 3$, the viscosity ratio ($\eta 1/\eta 3$) and the viscosity ratio ($\eta 1/\eta 2$) may be adjusted based on the type, the amount and the like of the structural viscosity imparting agent and the thermally conductive filler described later.

In the present description, the range written with "to" means a range from a numerical value equal to or more than the predetermined numerical value before the "to" to a numerical value equal to or less than the predetermined numerical value after the "to".

<Liquid polymer>

The thermally conductive composition of the present invention comprises a liquid polymer. The liquid polymer is liquid at room temperature (25°C), and examples thereof include silicone rubber and polyurethane resin, which are a raw material for preparing polymer matrix.

The liquid polymer may be a non-reactive compound having no reactive group or a reactive compound having a reactive group. Examples of reactive groups include an alkenyl group, a hydrosilyl group, a hydroxyl group and an isocyanate group.

Examples of liquid polymers include organopolysiloxane, polyol and polyisocyanate. The liquid polymer may include one component or may be a mixture of two or more components. In particular, organopolysiloxane is preferred as the liquid polymer. Use of organopolysiloxane as the liquid polymer makes it easier to increase the filling ratio of the thermally conductive filler and improve the thermal conductivity of the thermal conductive member formed from the thermally conductive composition.

Organopolysiloxane having a reactive group and organopolysiloxane having no reactive group, for example, may be used as organopolysiloxane. Organopolysiloxane having a reactive group is preferred.

Organopolysiloxane having a reactive group refers to organopolysiloxane having a reactive group capable of forming a cross-linked structure. Examples thereof include addition reaction-curable silicone, radical reaction-curable silicone, condensation reaction-curable silicone, ultraviolet light- or electron beam-curable silicone and moisture-curable silicone. Of them, addition reaction-curable silicone is preferred as the organopolysiloxane having a reactive group. In short, it is preferable that the liquid polymer according to the present invention is addition reaction-curable silicone.

Examples of addition reaction-curable silicones include those containing an alkenyl group-containing organopolysiloxane (base compound) and hydrogen organopolysiloxane (curing agent).

The liquid polymer according to the present invention may be those containing either of the base compound or the curing agent constituting the addition reaction-curable silicone. More specifically, the liquid polymer included in the thermally conductive composition may be alkenyl group-containing organopolysiloxane, hydrogen organopolysiloxane, or may include both alkenyl group containing organopolysiloxane and hydrogen organopolysiloxane.

It is also preferable to use the thermally conductive composition of the present invention to form a two-part curable thermally conductive material.

For example, a two-part curable thermally conductive material may comprise a first part comprising a thermally conductive composition comprising alkenyl group-containing organopolysiloxane, a thermally conductive filler and a structural viscosity imparting agent and having a viscosity ratio ($\eta 1/\eta 3$) of more than 8 and a second part comprising a thermally conductive composition comprising hydrogen organopolysiloxane, a thermally conductive filler and a structural viscosity imparting agent and having a viscosity ratio ($\eta 1/\eta 3$) of more than 8. The first part and the second part are mixed and reacted upon use to form a thermally conductive member including a polymer matrix made of silicone rubber.

In the two-part curable thermally conductive material, the thermally conductive filler is less likely to be settled down in storage in both the first part and the second part, and handling properties are improved upon use in both the first part and the second part.

The liquid polymer used in the above two-part curable thermally conductive material may be different from the addition reaction-curable organopolysiloxane. A liquid polymer that reacts when the first part and the second part are mixed may be included in the first part and the second part, respectively. For example, polyol may be used instead of the alkenyl group-containing organopolysiloxane contained in the first part described above, and polyisocyanate may be used instead of the hydrogen organopolysiloxane contained in the second part described above. In that case, by mixing the first part and the second part and allowing them to react, a thermally conductive member containing polymer matrix formed of polyurethane resin is formed.

<Structural viscosity imparting agent>

The thermally conductive composition of the present invention comprises a structural viscosity imparting agent. The structural viscosity imparting agent is a compound that is solid at room temperature (25°C), and by mixing this to the liquid polymer and leaving the mixture under specific conditions, viscosity can be increased. More specifically, the structural viscosity imparting agent has a function of increasing the viscosity in the low shear rate region by heating and cooling a mixture prepared by mixing the structural viscosity imparting agent into liquid polymer, compared to the viscosity before heating.

By mixing the liquid polymer and the structural viscosity imparting agent at room temperature and heating them to the melting point of the structural viscosity imparting agent or more, then cooling to the room temperature, a loose bond (inner structure) is formed in the mixture of the liquid polymer and the structural viscosity imparting agent. The loose bond is formed due to the cohesive force in the structural viscosity imparting agent and is not broken by gravity. For this reason, settle down of the thermally conductive filler can be suppressed in storage. Then, upon use, a certain level of shear is applied to the mixture, and thus the above loose bond is broken, and the viscosity is reduced to improve workability including coating properties and compressibility.

In other words, the structural viscosity imparting agent forms the above inner structure due to the cohesive force, and this increases the viscosity in the low shear rate region. In this regard, the cohesive force means the action of mutual adherence and bonding of compounds with a similar structure. Furthermore, the loose bond is formed in the process of heating at the melting point or more and cooling. Moreover, the loose bond is broken by shear stress. Therefore, the loose bond is broken when shear stress is generated after cooling, and the bond can be formed again by heating and cooling.

To allow the above function to be effective, it is preferable that the structural viscosity imparting agent is not separated from the liquid polymer for a predetermined time when the structural viscosity imparting agent is heated to liquid. More specifically, it is preferable that the compound has such compatibility that does not cause phase separation into two phases in the compatibility test described later.

The compatibility test is carried out as described in the following (i) and (ii). In one or both of the compatibility tests (i) and (ii), when there is no separation into two phases, the structural viscosity imparting agent is "a compound which has such compatibility that does not cause phase separation into two phases".

(i) 10 g of liquid polymer and 2 g of the structural viscosity imparting agent are put in a polypropylene container and left in a constant temperature bath at 80°C for 15 minutes. Then the mixture is stirred immediately (within 10 seconds) after being removed from the constant temperature bath, and while naturally cooling the mixture in an environment of 25°C, the condition 1 minute after being removed from the constant temperature bath is observed. After that whether the mixture is separated into two phases or not is observed.
(ii) A mixture of 5 g of liquid polymer, 4 g of compatibilizer and 1 g of the structural viscosity imparting agent is tested in the same manner as above (i).

Inclusion of the structural viscosity imparting agent in the thermally conductive composition of the present invention makes it easier to adjust the viscosity to the above viscosity and the viscosity ratio to the above viscosity ratio.

A structural viscosity imparting agent having the above function may be used without limitation. Regarding specific examples of structural viscosity imparting agents, when the liquid polymer is organopolysiloxane, the structural viscosity imparting agent is preferably a hydrocarbon compound that is solid at 25°C (hereinafter referred to as hydrocarbon compound X).

The hydrocarbon compound X has a melting point of preferably more than 25°C, more preferably 30°C or more, and even more preferably 40°C or more. The hydrocarbon compound X has a melting point of preferably 120°C or less, more preferably 80°C or less, and even more preferably 75°C or less.

The hydrocarbon compound X has a melting point of preferably more than 25°C and 120°C or less, more preferably 30°C or more and 80°C or less, and even more preferably 40°C or more and 75°C or less.

When the structural viscosity imparting agent is an hydrocarbon compound X with the above melting point, the viscosity ratio ($\eta 1/\eta 3$) can be easily adjusted to the above desired range, and a thermally conductive composition which can suppress settle down of thermally conductive filler in storage and which has excellent handling properties in use can be easily obtained.

Examples of hydrocarbon compounds X include paraffin wax, vaseline, polyalphaolefin (PAO), polyethylene wax and polypropylene wax. Of them, paraffin wax, vaseline, polyalphaolefin (PAO), polyethylene wax and polypropylene wax are preferred from the viewpoint of handling properties at room temperature. Vaseline is a semi-solid hydrocarbon compound, which is a mixture of hydrocarbon compounds such as isoparaffin, cycloparaffin and naphthene. Examples of vaseline include white vaseline specified in the Japanese Pharmacopoeia.

Of the above, paraffin wax is preferred. Paraffin wax is a generic name for solid saturated hydrocarbon compounds, and is, for example, a mixture of hydrocarbon compounds having 20 to 50 carbon atoms, in which the content of oil is 1% by weight or less. The saturated hydrocarbon compound may be linear, branched or may be a mixture thereof.

One hydrocarbon compound X may be used alone, or two or more of them may be used in combination.

The content of the structural viscosity imparting agent in the thermally conductive composition is preferably 0.5 part by mass or more, more preferably 3 parts by mass or more, and even more preferably 6 parts by mass or more, and preferably 25 parts by mass or less, more preferably 20 parts by mass or less, even more preferably 15 parts by mass or less, and still more preferably 10 parts by mass or less based on 100 parts by mass of the liquid polymer.

Furthermore, the content of the structural viscosity imparting agent in the thermally conductive composition is preferably 0.5 to 20 parts by mass, more preferably 3 to 15 parts by mass, and even more preferably 6 to 10 parts by mass based on 100 parts by mass of the liquid polymer.

It is preferable to adjust the content of the structural viscosity imparting agent in the thermally conductive composition based on the content of the compatibilizer described later. More specifically, it is preferable that the content of the structural viscosity imparting agent is X part(s) by mass or more, which is represented by the following equation (1), based on 100 parts by mass of the liquid polymer:

$$X \text{ (part(s) by mass)} = 0.5 + w \times 0.05 \qquad \text{equation (1)}$$

wherein, w represents the content (part(s) by mass) of the compatibilizer based on 100 parts by mass of the liquid polymer.

By adjusting the content of the structural viscosity imparting agent as described above, the viscosity ratio ($\eta 1/\eta 3$) of the thermally conductive composition can be easily adjusted to the above desired range, and a thermally conductive composition which can suppress settle down of thermally conductive filler in storage and which has excellent handling properties in use can be easily obtained.

<Compatibilizer>

It is preferable that the thermally conductive composition of the present invention comprises a compatibilizer. Inclusion of the compatibilizer reduces the viscosity (in particular viscosity $\eta 2$ at high shear rate) of the thermally conductive composition, improves coating properties and compressibility, and achieves excellent handling properties.

While the compatibilizer is not particularly limited as long as it is a compound compatible with liquid polymer at room temperature (25°C), it is preferable that the compatibilizer is a hydrocarbon compound that is liquid at 25°C (hereinafter also referred to as a hydrocarbon compound Y). The compatibilizer may be a hydrocarbon compound Y having a melting point of 25°C or less.

Unlike the method for reducing viscosity using a large amount of plasticizer such as dimethyl silicone oil, the method for reducing the viscosity of the thermally conductive composition using the hydrocarbon compound Y is capable of reducing the amount of low molecular weight siloxane formed by heating. Formation of low molecular weight siloxane may cause electrical malfunction. By contrast, although inclusion of the hydrocarbon compound Y in the thermally conductive composition usually facilitates settle down of thermally conductive filler in storage, by adjusting the viscosity ratio ($\eta 1/\eta 3$) as in the present invention, settle down of thermally conductive filler can be suppressed even if the hydrocarbon compound Y is included.

The hydrocarbon compound Y is not particularly limited as long as it is liquid at 25°C. Examples thereof include liquid paraffin and polyalphaolefin (PAO), and liquid paraffin is more preferred.

A mixture of saturated hydrocarbons having 10 to 50 carbon atoms is preferred, and those with an average number of carbon atoms of 15 to 40 are preferred as the hydrocarbon compound Y to reduce the viscosity of the thermally conductive composition and to maintain the heat resistance of the thermally conductive composition. In particular, a compound having an average number of carbon atoms of 20 to 35 is preferred.

When the average number of carbon atoms is 15 or more, the heat resistance of the thermally conductive composition can be kept at a certain level. When the average number of carbon atoms is 40 or less, the viscosity of the thermally conductive composition is likely to be reduced. The hydrocarbon compound Y has an average number of carbon atoms of preferably 15 or more, and more preferably 20 or more, and preferably 40 or less and more preferably 35 or less in order to improve the heat resistance of the thermally conductive composition and increase the compatibility with the liquid polymer to reduce the viscosity of the thermally conductive composition.

The hydrocarbon compound Y has a viscosity at 25°C of preferably 5 to 50 mPa · s and more preferably 10 to 30 mPa · s in order to reduce the viscosity of the thermally conductive composition and to maintain the heat resistance of the thermally conductive composition. The viscosity is measured by using a rheometer MCR-302e made by Anton Paar setting the temperature of the sample to 25°C with a Peltier plate using a $\phi$ 25 mm 1.997° cone plate under conditions of a shear rate of 100 (1/sec).

When a compatibilizer is included in the thermally conductive composition, the content of the compatibilizer is preferably 120 parts by mass or less, more preferably 80 parts by mass or less, even more preferably 50 parts by mass or less, and still more preferably 40 parts by mass or less based on 100 parts by mass of the liquid polymer from the viewpoint of the reduction of settle down of the thermally conductive filler in storage, and preferably 5 parts by mass or more, and more preferably 10 parts by mass or more from the viewpoint of the improvement in handling properties.

The content of the compatibilizer is preferably not less than 1.5 times and not more than 20 times, more preferably not less than 1.8 times and not more than 12 times, and even more preferably not less than twice and not more than 10 times the content of the structural viscosity imparting agent in order to adjust the viscosity ratio ($\eta 1/\eta 3$) to a certain range and reduce viscosity $\eta 2$.

<Thermally conductive filler>

The thermally conductive composition of the present invention comprises a thermally conductive filler. Inclusion of the thermally conductive filler improves thermally conductivity of the thermally conductive composition and the thermally conductive member prepared from the thermally conductive composition.

Examples of thermally conductive fillers include metal, metal oxide, metal nitride, metal hydroxide, carbon materials, oxide, nitride and carbide of substances other than metal. Furthermore, examples of shapes of the thermally conductive filler include spherical powder and irregular shaped powder.

Examples of metal for the thermally conductive filler include aluminum, copper and nickel. Examples of metal oxides include aluminum oxide, which is typically alumina, magnesium oxide and zinc oxide. Examples of metal nitrides include aluminum nitride. Examples of metal hydroxides include aluminum hydroxide. Furthermore, examples of carbon materials include spherical graphite and diamond. Examples of oxides, nitrides and carbides of substances other than metal include quartz, boron nitride and silicon carbide. Of them, aluminum oxide and aluminum hydroxide are preferred as the thermally conductive filler, and it is preferable to use aluminum oxide and aluminum hydroxide in combination.

The thermally conductive filler has an average particle size of preferably 0.1 to 200 $\mu$m, more preferably 0.3 to 100 $\mu$m, and even more preferably 0.5 to 70 $\mu$m.

It is preferable to use a small particle thermally conductive filler having an average particle size of 0.1 $\mu$m or more and 5 $\mu$m or less and a large particle thermally conductive filler having an average particle size of more than 5 $\mu$m and 200 $\mu$m or less in combination. Use of the thermally conductive filler having a different average particle size increases the filling ratio.

The average particle size of the thermally conductive filler may be measured in observation, for example, by an electron microscope. More specifically, the particle size of any 50 particles of the thermally conductive filler is measured using, for example, an electron microscope or an optical microscope and the average value (arithmetic mean value) may be determined as the average particle size.

The content of the thermally conductive filler is preferably 150 to 3,000 parts by mass, more preferably 300 to 2,000 parts by mass, and even more preferably 600 to 1,600 parts by mass based on 100 parts by mass of the liquid polymer.

By setting the content of the thermally conductive filler to the above lower limit or more, a certain level of thermal conductivity may be imparted to the thermally conductive composition and the thermally conductive member. By setting the content of the thermally conductive filler to the above upper limit or less, the thermally conductive filler can be dispersed in a good manner. This also prevents unnecessary increase in the viscosity of the thermally conductive composition.

<Silicon compound>

The thermally conductive composition of the present invention may comprise at least one silicon compound selected from the group consisting of an alkoxysilane compound and an alkoxysiloxane compound. Inclusion of such a silicon compound allows the viscosity of the thermally conductive composition to be reduced.

Examples of alkoxy silane compounds include methyltrimethoxysilane, dimethyldimethoxysilane, diethyldimethoxysilane, trimethylmethoxysilane, methyltriethoxysilane, dimethyldiethoxysilane, ethyltrimethoxysilane, n-propyltrimethoxysilane, di-n-propyldimethoxysilane, di-n-propyldiethoxysilane, isobutyltrimethoxysilane, isobutyltriethoxysilane, isobutyltrimethoxysilane, isobutyltriethoxysilane, n-hexyltrimethoxysilane, n-hexyltriethoxysilane, methylcyclohexyldimethoxysilane, methylcyclohexyldiethoxysilane, n-octyltrimethoxysilane, n-octyltriethoxysilane, n-decyltrimethoxysilane and n-decyltriethoxysilane. Of them, n-decyltrimethoxysilane, dimethyldimethoxysilane and n-octyltriethoxysilane are preferred, and n-decyltrimethoxysilane is more preferred from the viewpoint of the reduction in the viscosity of the thermally conductive composition.

Examples of alkoxysiloxane compounds include methylmethoxysiloxane oligomer, methylphenylmethoxysiloxane oligomer, methylepoxymethoxysiloxane oligomer, methylmercaptomethoxysiloxane oligomer and methylacryloylmethoxysiloxane oligomer.

One or more silicon compounds may be used as the silicon compound.

When the silicon compound is used in the thermally conductive composition, the content of the silicon compound is preferably 0.1 part by mass or more and more preferably 0.5 part by mass or more, and preferably 5 parts by mass or less, more preferably 3 parts by mass or less, and even more preferably 2 parts by mass or less based on 100 parts by mass of the liquid polymer. When the content of the silicon compound is the lower limit or more, the viscosity of the thermally conductive composition is likely to be reduced. Meanwhile, when the content of the silicon compound is the upper limit or less, reduction in the heat resistance of the thermally conductive composition can be suppressed.

<Silicone oil>

The thermally conductive composition of the present invention may comprise a silicone oil from the viewpoint of the reduction in the viscosity. Examples of silicone oils include a straight silicone oil such as dimethyl silicone oil and methylphenyl silicone oil.

The content of the silicone oil is preferably 5 parts by mass or less, more preferably 2 parts by mass or less, and even more preferably 0 parts by mass based on 100 parts by mass of the liquid polymer because low molecular weight siloxane is likely to be formed when a large amount of low viscosity silicone oil is mixed. The low viscosity silicone oil refers to silicone oil having a viscosity at 25°C of 50 cs or less, silicone oil having a viscosity at 25°C of 30 cs or less and silicone oil having a viscosity at 25°C of 20 cs or less.

In particular, it is preferable that the thermally conductive composition does not include silicone oil having a viscosity at 25°C of 20 cs or less. This easily prevents the formation of low molecular weight siloxane. The viscosity of silicone oil is measured by using a rheometer MCR-302e made by Anton Paar setting the temperature of the sample to 25°C with a Peltier plate using a φ 25 mm 1.997° cone plate under conditions of a shear rate of 100 (1/sec).

Various additives may be included in the thermally conductive composition of the present invention. Examples of additives include a catalyst, a flame retardant, an antioxidant and a colorant.

(Method for producing thermally conductive composition)

The method for producing a thermally conductive composition of the present invention comprises a step of preparing a mixture comprising a liquid polymer, a thermally conductive filler and a structural viscosity imparting agent; a step of heating the mixture; and a step of cooling the mixture. The step of cooling the mixture is a step of cooling the mixture to adjust the viscosity ratio ($\eta 1/\eta 3$) between a viscosity $\eta 1$ measured by a rheometer under conditions of a measurement temperature of 25°C and a shear rate of 0.00158 (1/s) and a viscosity $\eta 3$ measured by a rheometer under conditions of a measurement temperature of 25°C and a shear rate of 0.0501 (1/s) to more than 8. In short, the method for producing a thermally conductive composition of the present invention comprises a step of preparing a mixture comprising a liquid polymer, a thermally conductive filler, a structural viscosity imparting agent and an additive mixed as necessary; a step of heating the mixture; and a step of cooling the mixture in that order. The thermally conductive composition of the present invention in which the viscosity ratio ($\eta 1/\eta 3$) is adjusted as described above can be obtained through the above steps. The method for producing a supply form of a thermally conductive composition described later involves the same steps as the method for producing the thermally conductive composition does.

The method for producing a thermally conductive composition of the present invention may comprise a step of filling a container with a mixture, after the step of preparing a mixture described above. It is preferable that the step of heating the mixture and the step of cooling the mixture are performed after filling a container with the mixture.

A known mixing method may be suitably used in the step of preparing a mixture, and for example, materials may be mixed by a known kneader, kneading roll or mixer.

The heating temperature in the step of heating the mixture may be a temperature at which the structural viscosity imparting agent melts or more, and for example the heating temperature is the melting point of the structural viscosity imparting agent or more and the melting point +10°C to melting point +50°C. The upper limit of the heating temperature is not particularly limited, and for example is preferably 200°C or less from the viewpoint of the suppression of thermal degradation of the structural viscosity imparting agent. Furthermore, when the mixture includes a volatile component, it is preferable that the heating temperature is kept as low as possible, and for example, is preferably 100°C or less, and particularly preferably 80°C or less. The heating time is not particularly limited, and is set to a period of time in which the whole mixture is heated depending on the volume of the mixture. The heating time is for example, 5 to 1,000 minutes, and preferably 10 to 500 minutes. When the heating time is lower limit or more, even the inside of the mixture is sufficiently heated. When the heating time is the upper limit or less, and when the mixture includes a volatile substance, a part of the volatile substance can be prevented from evaporating.

In the step of cooling the mixture, the above mixture after heating is cooled to room temperature (25°C). The method of cooling is not particularly limited, and the mixture may be cooled by a cooler or may be naturally cooled.

(Two-part curable thermally conductive material)

In the present invention, it is preferable to form a two-part curable thermally conductive material using the thermally conductive composition from the viewpoint of storage stability and the like.

More specifically, a two-part curable thermally conductive material comprising a first part comprising a thermally conductive composition comprising alkenyl group-containing organopolysiloxane, a thermally conductive filler and a structural viscosity imparting agent and having a viscosity ratio ($\eta 1/\eta 3$) of more than 8 and a second part comprising a thermally conductive composition comprising hydrogen organopolysiloxane, a thermally conductive filler and a structural viscosity imparting agent and having a viscosity ratio ($\eta 1/\eta 3$) of more than 8 is preferred as described above.

The mass ratio between the first part and the second part (the second part/ the first part) is preferably 1, or a value closed to 1. The mass ratio is specifically preferably 0.9 to 1.1 and more preferably 0.95 to 1.05. A mass ratio between the first part and the second part of 1 or a value close to 1 allows a mixture of the first part and the second part to be easily prepared.

It is preferable that the first part include a catalyst for the addition reaction and the second part does not. By doing so, the first part and the second part have excellent storage stability before mixing, facilitate reaction after mixing and rapidly cures, and physical properties of the thermally conductive member obtained by curing can be improved. Although the cause is not clear, it may be because the catalyst for addition reaction such as platinum catalyst is coordinated with the alkenyl group, which is the site of the addition reaction in the alkenyl group-containing organopolysiloxane, allowing curing to proceed.

Furthermore, it is preferable that the second part includes alkenyl group-containing organopolysiloxane. When the second part includes alkenyl group-containing organopolysiloxane in addition to hydrogen organopolysiloxane, which is a curing agent, it becomes easier to adjust the mass ratio and the viscosity ratio of the second part in preparing the mixture of both parts, to the first part to 1 or a value close to 1. By contrast, it is preferable that the first part does not include hydrogen organopolysiloxane which is a curing agent.

It is preferable that the above first part and the second part are separately stored in a container such as a syringe, a cartridge, a pail can or a drum. More specifically, the two are stored in such a manner that the first part is put in the first syringe and the second part is put in the second syringe. In this case the first syringe and the second syringe are arranged in a row to prepare a dual syringe. When a cartridge is used, the first part and the second part are stored preferably in such a manner that the first part is put in the first cartridge and the second part is put in the second cartridge. In this case as well the first cartridge and the second cartridge are arranged in a row to prepare a dual cartridge. Furthermore, when a pail can or a drum is used, the first part and the second part are stored preferably in such a manner that the first part is put in the first pail can or the first drum, and the second part is put in the second pail can or the second drum.

As described above, the thermally conductive composition is prepared through a step of preparing a mixture, a step of heating the mixture, and a step of cooling the mixture. Thus, a mixture comprising, for example, alkenyl group-containing organopolysiloxane, a thermally conductive filler and a structural viscosity imparting agent is prepared, and the mixture is put in the first syringe, and through the heating step and the cooling step, the first syringe in which the first part is put is prepared. Likewise, a mixture comprising, for example, hydrogen organopolysiloxane, a thermally conductive filler and a structural viscosity imparting agent is prepared, and the mixture is put in the second syringe, and through the heating step and the cooling step, the second syringe in which the second part is put is prepared.

With the settle down of the thermally conductive filler suppressed, the first part put in the first syringe and the second part put in the second syringe are stored under excellent conditions. When in use, the first part and the second part are discharged from the first syringe and the second syringe, respectively, are mixed by a static mixer or the like, and cured to form a thermally conductive member. When the first part and the second part are discharged, a certain level of shear force is generated, resulting in reduced viscosity of the first part and the second part, and hence easy discharge. Furthermore, the coating formed after discharge has excellent workability as it can be easily compressed. This, for example, simplifies an operation of discharging a mixture of the first part and the second part into the space between a heating element and a heat sink to form a coating having a certain level of thickness and then stretching the coating into a thin member with a small load.

[Supply form]

The present invention also provides a supply form of a thermally conductive composition, comprising a container filled with the thermally conductive composition described above. The present invention also provides a supply form of a two-part curable thermally conductive material, comprising a first container filled with the above first part and a second container filled with the above second part. Examples of containers include a syringe, a cartridge, a pail can and a drum as described above. The supply form can suppress settle down of thermally conductive filler contained in the thermally conductive composition when the thermally conductive composition is stored in the container, and the supply form provides excellent workability when ejecting by, for example, discharging the thermally conductive composition from the supply form.

It is preferable that the supply form of a thermally conductive composition and the supply form of a two-part curable thermally conductive material are used in such a manner that the thermally conductive composition or the two-part curable thermally conductive material is supplied to an application apparatus from a container. The application apparatus is not particularly limited as long as it has a function of application of the thermally conductive composition, and examples thereof include a dispenser.

[Thermally conductive member]

The present invention can also provide a thermally conductive member comprising a polymer matrix, a thermally conductive filler and a structural viscosity imparting agent having a melting point of more than 25°C.

The present invention also provides a thermally conductive filler comprising a polymer matrix, a thermally conductive filler and a hydrocarbon compound solid at 25°C. The thermally conductive member is a cured product of the thermally conductive composition described above, or a cured product of the two-part curable thermally conductive material described above.

Examples of polymer matrix include silicone rubber and polyurethane resin, and in particular, silicone rubber is preferred.

The type of the thermally conductive filler is as described above.

The structural viscosity imparting agent is preferably a hydrocarbon compound solid at 25°C, and is more preferably a hydrocarbon compound X having a melting point of more than 25°C and 120°C or less. Details of the hydrocarbon compound X are as described above. The amount of the thermally conductive filler relative to that of the polymer matrix is the same as the amount of the thermally conductive filler relative to the liquid polymer described above. The amount of the structural viscosity imparting agent relative to that of the polymer matrix is the same as the amount of the structural viscosity imparting agent relative to the liquid polymer described above.

The thermally conductive member is obtained from the thermally conductive composition or the two-part curable thermally conductive material described above. When the liquid polymer contained in the thermally conductive composition is a reactive compound having a reactive group, a thermally conductive member is obtained by curing the thermally conductive composition. When the two-part curable thermally conductive material is used, the first part and the second part are mixed as described above and cured to give a thermally conductive member.

For the thermally conductive member of the present invention, the thermally conductive composition, which is the raw material, can be handled well because the structural viscosity imparting agent is used, and thus workability when forming the thermally conductive member is excellent. Furthermore, settle down of thermally conductive filler in the thermally conductive composition, i.e., the raw material, is suppressed in storage, and the thermally conductive composition has uniform formulation. Thus, the formulation of the resulting thermally conductive member is also uniform, and variation in properties is small.

The thermally conductive member has a thermal conductivity of preferably $1.0 \, W/m \cdot K$ or more, more preferably $1.5 \, W/m \cdot K$ or more, and even more preferably $2.0 \, W/m \cdot K$ or more. A thermal conductivity of the lower limit or more improves thermally conductive properties. Thus, when the thermally conductive member is used, for example, as a spacer for a battery cell module, heat generated in the battery cell can be effectively transferred to the module housing through the spacer, and this suppresses excess increase in the temperature of the battery cell. The higher the thermal conductivity of the thermally conductive member, the better, but the thermally conductive member has a thermal conductivity of, for example, practically $15 \, W/m \cdot K$ or less. The thermal conductivity is measured according to ASTM D5470.

[Battery module]

The application of the thermally conductive member of the present invention is not particularly limited, and the thermally conductive member may be used as a spacer in a battery module as described below.

The battery module of the present invention comprises a spacer comprising the thermally conductive member, a plurality of battery cells, and a module housing that houses the plurality of battery cells, and the spacer is arranged in the module housing.

The spacer made of the thermally conductive member is put between battery cells, and between the battery cell and the module housing, and the spacer put therein is closely attached to the battery cell and the module housing. Accordingly, the spacer between battery cells functions to keep the battery cells apart. Furthermore, the spacer between the battery cell and the module housing is closely attached to both the battery cell and the module housing, and functions to transfer heat generated in the battery cell to the module housing.

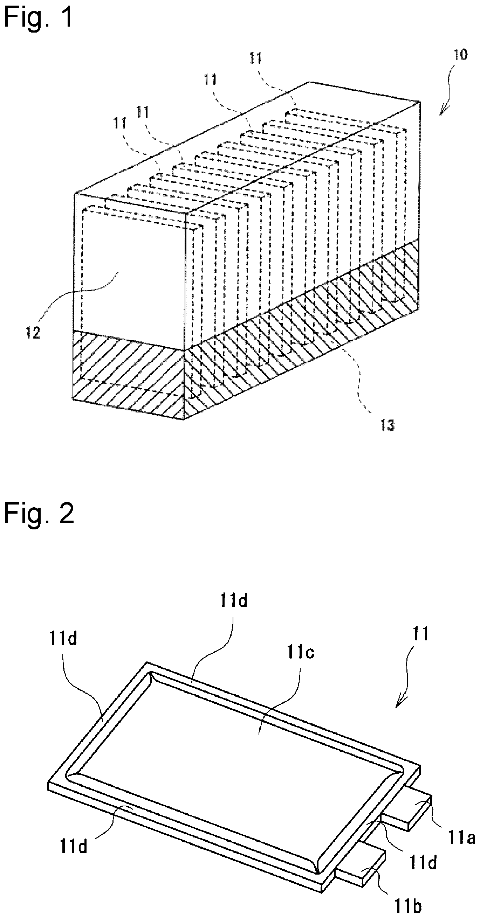

Fig. 1 illustrates a specific structure of the battery module. Fig. 2 illustrates a specific structure of the respective battery cells. As shown in Fig. 1, a plurality of battery cells 11 are arranged in the battery module 10. The battery cells 11 are sealed in flexible outer film by lamination, and the overall shape is flat and thin for the height and the width. As shown in Fig. 2, the positive electrode 11a and the negative electrode 11b of the battery cell 11 are exposed, and the center part 11c of the flat surface is designed to be thicker than the pressure-bonded end portion 11d.

As shown in Fig. 1, the respective battery cells 11 are arranged so that their flat surfaces are faced with each other. In the structure of Fig. 1, the plurality of battery cells 11 that are housed in the module housing 12 are not entirely covered with the spacer 13 put therein. The spacer 13 is put in the module housing 12 so that part of the space in the module housing (the bottom part) is filled with the spacer 13. The spacer 13 is put between battery cells 11 and between the battery cell 11 and the module housing 12. In this part the spacer 13 is closely attached to the surface of the battery cell 11 and the inner surface of the module housing 12.

While the spacer 13 put between battery cells 11 is bonded to the surface of the battery cells 11, the spacer 13 itself is moderately elastic and soft, and even when an external force that changes the distance between battery cells 11 is applied thereto, the spacer 13 can alleviate distortion and deformation due to the external force. Thus, the spacer 13 functions to keep the battery cells 11 apart.

The spacer 13 put between the battery cell 11 and the module housing 12 is also closely bonded to the surface of the battery cell 11 and the inner surface of the module housing 12. As a result, the heat generated in the battery cell 11 is transferred to the inner surface of the module housing 12 closely bonded to one surface of the spacer 13 through the spacer 13 bonded to the surface of the battery cell 11.

The spacer 13 is formed in the battery module 10 by application of the thermally conductive composition or the two-part curable thermally conductive material which are in the form of liquid using an application apparatus such as a usual dispenser, and then curing the coating. For the two-part curable thermally conductive material, for example, the first syringe and the second syringe (or the first cartridge and the second cartridge) described above may be set on a dispenser, and the thermally conductive composition may be supplied to the dispenser from the respective syringes and applied to materials. The method for supplying the thermally conductive composition is not particularly limited, and examples thereof include a method using air pressure, a servomoter or a Mohno pump.

The two-part curable thermally conductive material is easily stored, and if mixed immediately before use, the material is less likely to be cured in the operation of application using a dispenser, and can be rapidly cured after the application. Furthermore, application by the dispenser is preferred because the material can be put relatively deep into the housing 12 of the battery module 10.

For the spacer 13 which covers the battery cell 11, preferably 20 to 100%, and more preferably 20 to 40% of one surface of the respective battery cells 11 is covered with the spacer 13. When 20% or more of the surface is covered therewith, the battery cells 11 are held in a stable manner. Furthermore, sufficiently covering the battery cells which produce large amount of heat improves efficiency of heat dissipation. Meanwhile, when 100% or less of the surface is covered therewith, heat generated in the battery cells 11 can be efficiently released. Furthermore, covering 40% or less suppresses weight increase and the reduction in workability. It is also preferable to cover the side of the battery cell 11 where electrodes 11a and 11b are located with the spacer 13 in order to improve efficiency of heat dissipation. It is more preferable to cover the whole of the electrodes 11a and 11b with the spacer 13.

As described above, in the battery module 10, the heat generated in the battery cells 11 can be released to the module housing 12 through the spacer 13.

It is also preferable to use the spacer 13 in a battery pack having a plurality of battery modules 10 inside thereof. A battery pack generally has a plurality of battery modules 10 and a battery pack housing which stores the battery modules 10. In the battery pack, a spacer 13 can be put between the battery module 10 and the battery pack housing. This allows the heat released to the module housing 12 as described above to be further released to the battery pack housing, enabling effective heat dissipation.

Furthermore, since the thermally conductive member of the present invention is used for the spacer 13, workability in forming the spacer 13 is high.

Examples

Hereinafter the present invention will be described in detail with reference to Examples, but the present invention is not limited by these Examples.

[Viscosity]

The viscosity of the first part and the second part, which were the thermally conductive composition, was measured as follows.

The viscosity of the first part and the second part, which were a sample, was measured at various shear rates by using a rheometer. Using Rheometer MCR-302e made by Anton Paar, the temperature of the sample was adjusted to 80°C with a Peltier plate, and the sample was left for 5 minutes. Then the sample was cooled to 25°C and left for 10 minutes. Subsequently, the viscosity was measured while continuously changing the shear rate using a $\phi$ 20 mm parallel plate. The viscosities were measured under conditions of a shear rate of 0.00158 (1/s), 0.00631 (1/s), 0.0126 (1/s), 0.0251 (1/s), 0.0501 (1/s), 0.1 (1/s), 0.2 (1/s), 0.398 (1/s), 1.58 (1/s), 3.16 (1/s), 6.31 (1/s) and 12.6 (1/s), and the viscosity ratio ($\eta 1/\eta 3$) and the viscosity ratio ($\eta 1/\eta 2$) were determined.

[Evaluation of suppression of settle down]

Suppression of settle down in each of the first part and the second part was evaluated as described below.
10 cc of the respective samples was put in a 15 cc transparent container (having a cylindrical shape with a diameter of 24 mm) and heated at the melting point of the structural viscosity imparting agent +10°C for 30 minutes. Next, the sample was naturally cooled in an atmosphere of 25°C until the temperature of the sample reached 25°C, and left for 30 days, and then the condition of the sample was observed. The condition of the sample was evaluated based on the following criteria. A higher score of the evaluation means a higher effect of suppression of settle down.

(Evaluation criteria)

5 No change in appearance
4 Small amount of liquid component exude at edge of surface
3 Small amount of liquid component exude at surface, but liquid component do not flow even when container tilted
2 Small amount of liquid component exude at surface, and liquid component flow when container tilted
1 Liquid component separated when viewed from side

[Evaluation of compressibility]

16.4 cc of the raw material of the first part and the raw material of the second part shown in the Tables was put in the first syringe and the second syringe, which were a 25 cc dual syringe, respectively. Next, the first part and the second part were heated to the melting point of the structural viscosity imparting agent +10°C, and after leaving for 15 minutes, the sample was cooled to 25°C and left for 10 minutes.
Subsequently, 2.5 cc of the sample (a mixture of the first part and the second part, mass ratio 1:1) was discharged to an aluminum plate using a static mixer. The material discharged was compressed by a 40 mm $\phi$ plunger (a jig for compression test) at a compression rate of 60 mm/ minute, and the value of the load at which the gap between the jigs was compressed to 0.665 mm was read and determined as the compressive load. The temperature for the compression test was 25°C. Compressibility was evaluated based on the value of compressive load according to the following criteria.

(Evaluation criteria)

| 5 | Less than 100 N |
|---|---|
| 4 | 100 N or more and less than 175 |
| 3 | 175 N or more and less than 250 |
| 2 | 250 N or more and less than 350 |
| 1 | 350 N or more |

[Comprehensive evaluation]

The average value of the evaluation of suppression of settle down and the evaluation of compressibility in Examples and Comparative Examples was determined as comprehensive evaluation.
More specifically, the value of the comprehensive evaluation was calculated by the following equation.

Comprehensive evaluation = (evaluation of suppression of settle down of first part + evaluation of suppression of settle down of second part + evaluation of compressibility $\times$ 2)/4

In Examples and Comparative Examples, the following components were used.

<Liquid polymer>

• Silicone A agent including alkenyl group-containing organopolysiloxane and small amount of addition reaction catalyst (platinum catalyst), viscosity at 25°C: 400 cs.
• Silicone B agent including alkenyl group-containing organopolysiloxane and hydrogen organopolysiloxane, viscosity at 25°C 300 cs.

<Structural viscosity imparting agent (hydrocarbon compound X solid at 25°C)>

• Solid paraffin-1 KH PARAFFIN WAX F62H (melting point 65°C) made by Chusei Oil Co., Ltd.
• Solid paraffin-2 PARAFFIN WAX 115 (melting point 50°C) made by Nippon Seiro Co., Ltd.

For the measurement of the melting point of the hydrocarbon compound X, 20 mg of the hydrocarbon compound X was precisely weighed in an aluminum cell, and then the melting point was measured using DSC-60 made by Shimadzu Corporation under nitrogen flow at a temperature increase rate of 105°C/ minute from 25°C to 90°C. Then the temperature of the endothermic peak on the DSC curve measured was defined as the melting point. When the curve had multiple endothermic peaks, the temperature of the endothermic peak indicating the maximum endotherm was defined as the melting point.

<Thermally conductive filler>

• Aluminum oxide, spherical, having average particle size of 12 μm
• Aluminum oxide, spherical, having average particle size of 45 μm
• Aluminum hydroxide, irregular shape, having average particle size of 1 μm
• Aluminum hydroxide, irregular shape, having average particle size of 10 μm
• Aluminum hydroxide, irregular shape, having average particle size of 90 μm

<Compatibilizer (hydrocarbon compound Y liquid at 25°C)>

• Liquid paraffin viscosity 15.69 mPa · s (25°C)

The viscosity of the hydrocarbon compound Y was measured by using a rheometer MCR-302e made by Anton Paar setting the temperature of the sample to 25°C with a Peltier plate using a φ 25 mm 1.997° cone plate under conditions of a shear rate of 100 (1/sec).

<Silicon compound>

n-decyltrimethoxysilane

< Thixotropy-imparting agent >

Fumed silica primary particles having an average particle size of 10 nm

[Examples 1 to 15, Comparative Example 1]

The respective components were mixed based on the formulation shown in Tables 1 to 3 and the mixture was heated at the melting point of the structural viscosity imparting agent +10°C for 30 minutes, and then the mixture was naturally cooled to 25°C to give the first part and the second part, respectively. Suppression of settle down and compressibility of the first part and the second part were evaluated as described above. The results are shown in Tables 1 to 3.

Table 1

| | | Part(s) by mass | Example 1 | | Example 2 | | Example 3 | | Example 4 | | Example 5 | |
|---|---|---|---|---|---|---|---|---|---|---|---|---|
| | | | First part | Second part | First part | Second part | First part | Second part | First part | Second part | First part | Second part |
| Liquid polymer | Silicone A agent | | 100 | | 100 | | 100 | | 100 | | 100 | |
| | Silicone B agent | | | 100 | | 100 | | 100 | | 100 | | 100 |
| Silicon compound | n-decyltrimethoxysilane | | 1 | 1 | 1 | 1 | 1 | 1 | 1 | 1 | 1 | 1 |
| Compatibilizer | Liquid paraffin | | | | | | | | 9 | 9 | 8 | 8 |
| Structural viscosity imparting agent | Solid paraffin-1 (melting point 65°C) | | 1 | 1 | 2 | 2 | 3 | 3 | 2 | 2 | 3 | 3 |
| | Solid paraffin-2 (melting point 50°C) | | | | | | | | | | | |
| Thixotropic agent | Fumed silica having a primary particle size of 10 nm | | | | | | | | | | | |
| Thermally conductive filler | Aluminum oxide (spherical, 12 μm) | | 102 | 102 | 103 | 103 | 104 | 104 | 111 | 111 | 111 | 111 |
| | Aluminum oxide (spherical, 45 μm) | | 408 | 408 | 412 | 412 | 417 | 417 | 444 | 444 | 444 | 444 |
| | Aluminum hydroxide (irregular shape, 1 μm) | | 122 | 122 | 124 | 124 | 125 | 125 | 133 | 133 | 133 | 133 |
| | Aluminum hydroxide (irregular shape, 10 μm) | | 102 | 102 | 103 | 103 | 104 | 104 | 111 | 111 | 111 | 111 |
| | Aluminum hydroxide (irregular shape, 90 μm) | | 265 | 265 | 268 | 268 | 271 | 271 | 289 | 289 | 289 | 289 |

(continued)

| Viscosity (Pa·s) | | Shear rate | | (1/s) | Example 1 | | Example 2 | | Example 3 | | Example 4 | | Example 5 | |
|---|---|---|---|---|---|---|---|---|---|---|---|---|---|---|
| | | | | | First part | Second part | First part | Second part | First part | Second part | First part | Second part | First part | Second part |
| | η1 | | 0.00158 | | 8425 | 8058 | 12751 | 11459 | 16116 | 13698 | 9506 | 8256 | 16304 | 14659 |
| | | | 0.00631 | | 2557 | 2420 | 3055 | 2989 | 4176 | 4021 | 2210 | 2111 | 4205 | 4025 |
| | | | 0.0126 | | 1490 | 1395 | 1587 | 1487 | 2154 | 2065 | 1125 | 1079 | 2154 | 2076 |
| | | | 0.0251 | | 1261 | 1200 | 1041 | 989 | 1383 | 1277 | 694 | 623 | 1266 | 1136 |
| | η3 | | 0.0501 | | 1036 | 987 | 1013 | 956 | 1273 | 1156 | 594 | 556 | 1030 | 963 |
| | | | 0.1 | | 862 | 811 | 801 | 749 | 1021 | 951 | 545 | 505 | 808 | 756 |
| | | | 0.2 | | 782 | 735 | 669 | 610 | 790 | 711 | 441 | 394 | 649 | 594 |
| | | | 0.398 | | 685 | 602 | 596 | 544 | 669 | 587 | 397 | 359 | 540 | 487 |
| | | | 1.58 | | 356 | 287 | 396 | 329 | 455 | 359 | 245 | 196 | 303 | 253 |
| | η2 | | 3.16 | | 236 | 187 | 272 | 235 | 327 | 247 | 172 | 156 | 213 | 175 |
| | | | 6.31 | | 161 | 154 | 182 | 162 | 221 | 183 | 122 | 102 | 145 | 119 |
| | | | 126 | | 106 | 98 | 108 | 89 | 141 | 128 | 82 | 75 | 91 | 73 |
| Viscosity ratio (η1/η2) | | | | | 36 | 43 | 47 | 49 | 49 | 55 | 55 | 53 | 77 | 84 |
| Viscosity ratio (η1/η3) | | | | | 8.1 | 82 | 12.6 | 120 | 127 | 11.8 | 160 | 14.8 | 158 | 152 |
| Evaluation of suppression of settle down | | | | | 3 | 3 | 4 | 3 | 4 | 4 | 3 | 3 | 4 | 4 |
| Compressibility | | | | | 3 | | 2 | | 2 | | 4 | | 4 | |
| Comprehensive evaluation | | | | | 3.0 | | 2.8 | | 3.0 | | 3.5 | | 4.0 | |

17

EP 4 502 102 A1

Table 2

| | | | Example 6 | | Example 7 | | Example 8 | | Example 9 | | Example 10 | |
|---|---|---|---|---|---|---|---|---|---|---|---|---|
| | | | First part | Second part | First part | Second part | First part | Second part | First part | Second part | First part | Second part |
| Liquid polymer | Silicone A agent | Part(s) by mass | 100 | | 100 | | 100 | | 100 | | 100 | |
| | Silicone B agent | | | 100 | | 100 | | 100 | | 100 | | 100 |
| Silicon compound | n-decyltrimethoxysilane | | 1 | 1 | 1 | 1 | 1 | 1 | 1 | 1 | 2 | 2 |
| Compatibilizer | Liquid paraffin | | 7 | 7 | 39 | 39 | 37 | 37 | 36 | 36 | 92 | 92 |
| Structural viscosity imparting agent | Solid paraffin-1 (melting point 65°C) | | 4 | 4 | 4 | 4 | 6 | 6 | 7 | 7 | 6 | 6 |
| | Solid paraffin-2 (melting point 50°C) | | | | | | | | | | | |
| Thixotropic agent | Fumed silica having a primary particle size of 10 nm | | | | | | | | | | | |
| Thermally conductive filler | Aluminum oxide (spherical, 12 μm) | | 111 | 111 | 143 | 143 | 143 | 143 | 143 | 143 | 200 | 200 |
| | Aluminum oxide (spherical, 45 μm) | | 444 | 444 | 571 | 571 | 571 | 571 | 571 | 571 | 800 | 800 |
| | Auminum hydroxide (irregular shape, 1 μm) | | 133 | 133 | 171 | 171 | 171 | 171 | 171 | 171 | 240 | 240 |
| | Auminum hydroxide (irregular shape, 10 μm) | | 111 | 111 | 143 | 143 | 143 | 143 | 143 | 143 | 200 | 200 |
| | Auminum hydroxide (irregular shape, 90 μm) | | 289 | 289 | 371 | 371 | 371 | 371 | 371 | 371 | 520 | 520 |

18

EP 4 502 102 A1

(continued)

| | Shear rate (1/s) | Example 6 First part | Example 6 Second part | Example 7 First part | Example 7 Second part | Example 8 First part | Example 8 Second part | Example 9 First part | Example 9 Second part | Example 10 First part | Example 10 Second part |
|---|---|---|---|---|---|---|---|---|---|---|---|
| Viscosity (Pa·s) | | | | | | | | | | | |
| η1 | 0.00158 | 21376 | 20121 | 14883 | 12989 | 14050 | 12563 | 22567 | 20611 | 20133 | 18447 |
| | 0.00631 | 5163 | 5014 | 3522 | 3264 | 3567 | 3254 | 5148 | 4698 | 5813 | 5698 |
| | 0.0126 | 2607 | 2486 | 1711 | 1588 | 1795 | 1502 | 2471 | 2366 | 3061 | 2819 |
| | 0.0251 | 1507 | 1422 | 930 | 811 | 1023 | 907 | 1288 | 1154 | 1601 | 1563 |
| η3 | 0.0501 | 1181 | 1102 | 666 | 593 | 775 | 698 | 855 | 780 | 858 | 799 |
| | 0.1 | 848 | 759 | 578 | 501 | 725 | 582 | 756 | 693 | 502 | 420 |
| | 0.2 | 653 | 603 | 468 | 378 | 563 | 481 | 535 | 461 | 351 | 287 |
| | 0.398 | 544 | 489 | 419 | 311 | 477 | 408 | 453 | 399 | 266 | 209 |
| | 1.58 | 331 | 287 | 262 | 229 | 304 | 258 | 310 | 251 | 161 | 125 |
| η2 | 3.16 | 238 | 179 | 187 | 135 | 225 | 181 | 241 | 188 | 121 | 105 |
| | 631 | 167 | 122 | 130 | 110 | 160 | 135 | 181 | 165 | 89 | 79 |
| | 126 | 108 | 89 | 84 | 69 | 108 | 84 | 127 | 100 | 63 | 51 |
| Viscosity ratio (η1/η2) | | 90 | 112 | 80 | 96 | 63 | 69 | 93 | 110 | 166 | 176 |
| Viscosity ratio (η1/η3) | | 18.1 | 18.3 | 22.3 | 21.9 | 18.1 | 18.0 | 26.4 | 26.4 | 23.5 | 23.1 |
| Evaluation of suppression of settle down | | 4 | 4 | 4 | 4 | 4 | 4 | 4 | 4 | 4 | 4 |
| Compressibility | | 3 | | 4 | | 3 | | 3 | | 4 | |
| Comprehensive evaluation | | 3.5 | | 4.0 | | 3.5 | | 3.5 | | 4.0 | |

Table 3

| | | | Example 11 | | Example 12 | | Example 13 | | Example 14 | | Example 15 | | Comparative Example 1 | |
|---|---|---|---|---|---|---|---|---|---|---|---|---|---|---|
| | | | First part | Second part | First part | Second part | First part | Second part | First part | Second part | First part | Second part | First part | Second part |
| Liquid polymer | Silicone A agent | | 100 | | 100 | | 100 | | 100 | | 100 | | 100 | |
| | Silicone B agent | | | 100 | | 100 | | 100 | | 100 | | 100 | | 100 |
| Silicon compound | n-decyltrimethoxysilane | | 2 | 2 | 2 | 2 | 1 | 1 | 1 | 1 | 1 | 1 | 2 | 2 |
| Compatibilizer | Liquid paraffin | | 90 | 90 | 88 | 88 | | | 37 | 37 | 36 | 36 | | |
| Structural viscosity imparting agent | Solid paraffin-1 (melting point 65°C) | Part(s) by mass by mass | 8 | 8 | 10 | 10 | | | | | | | | |
| | Solid paraffin-2 (melting point 50°C) | | | | | | 3 | 3 | 7 | 7 | 9 | 9 | | |
| Thixotropic agent | Fumed silica having a primary particle size of 10 nm | | | | | | | | | | | | 2 | 2 |
| Thermally conductive filler | Aluminum oxide (spherical, 12 pm) | | 200 | 200 | 200 | 200 | 104 | 104 | 143 | 143 | 143 | 143 | 104 | 104 |
| | Aluminum oxide (spherical, 45 μm) | | 800 | 800 | 800 | 800 | 417 | 417 | 571 | 571 | 571 | 571 | 415 | 415 |
| | Aluminum hydroxide (irregular shape, 1 μm) | | 240 | 240 | 240 | 240 | 125 | 125 | 171 | 171 | 171 | 171 | 124 | 124 |
| | Numinum hydroxide (irregular shape, 10 μm) | | 200 | 200 | 200 | 200 | 104 | 104 | 143 | 143 | 143 | 143 | 104 | 104 |
| | Auminum hydroxide (irregular shape, 90 μm) | | 520 | 520 | 520 | 520 | 271 | 271 | 371 | 371 | 371 | 371 | 269 | 269 |

(continued)

| Viscosity (Pa-s) | | Shear rate | | (1/s) | Example 11 | | Example 12 | | Example 13 | | Example 14 | | Example 15 | | Comparative Example 1 | |
|---|---|---|---|---|---|---|---|---|---|---|---|---|---|---|---|---|
| | | | | | First part | Second part | First part | Second part | First part | Second part | First part | Second part | First part | Second part | First part | Second part |
| | η1 | | 0.00158 | | 24850 | 22598 | 28592 | 25335 | 8941 | 8021 | 10411 | 8915 | 9852 | 8125 | 12002 | 11749 |
| | | | 0.00631 | | 6911 | 6548 | 7997 | 7489 | 2067 | 1899 | 2827 | 2611 | 2538 | 2225 | 11450 | 11289 |
| | | | 0.0126 | | 3619 | 3456 | 4229 | 3998 | 1132 | 1087 | 1456 | 1239 | 1285 | 1130 | 7311 | 6992 |
| | | | 0.0251 | | 1926 | 1879 | 2239 | 2036 | 815 | 735 | 766 | 695 | 687 | 632 | 4541 | 4678 |
| | η3 | | 0.0501 | | 1049 | 956 | 1214 | 1098 | 787 | 695 | 460 | 405 | 431 | 389 | 3042 | 3131 |
| | | | 0.1 | | 616 | 569 | 696 | 602 | 631 | 586 | 332 | 287 | 328 | 278 | 1973 | 2017 |
| | | | 0.2 | | 413 | 352 | 452 | 398 | 604 | 511 | 238 | 166 | 235 | 179 | 1188 | 1209 |
| | | | 0.398 | | 294 | 269 | 337 | 289 | 548 | 436 | 223 | 161 | 228 | 171 | 700 | 731 |
| | | | 1.58 | | 179 | 158 | 199 | 156 | 379 | 299 | 173 | 125 | 185 | 141 | 419 | 433 |
| | η2 | | 3.16 | | 139 | 121 | 154 | 122 | 241 | 235 | 128 | 102 | 142 | 123 | 266 | 268 |
| | | | 6.31 | | 105 | 98 | 117 | 105 | 183 | 166 | 91 | 81 | 103 | 95 | 167 | 163 |
| | | | 12.6 | | 77 | 63 | 85 | 63 | 119 | 106 | 61 | 58 | 70 | 67 | 119 | 120 |
| Viscosity ratio (η1/η2) | | | | | 178 | 187 | 185 | 208 | 37 | 34 | 82 | 87 | 69 | 66 | 45 | 44 |
| Viscosity ratio (η1/η3) | | | | | 23.7 | 236 | 235 | 23.1 | 11.4 | 11.5 | 226 | 220 | 228 | 20.9 | 39 | 3.8 |
| Evaluation of suppression of settle down | | | | | 4 | 4 | 5 | 5 | 3 | 3 | 3 | 3 | 3 | 3 | 3 | 3 |
| Compressibility | | | | | 4 | | 4 | | 3 | | 4 | | 4 | | 2 | |
| Comprehensive evaluation | | | | | 4.0 | | 4.5 | | 3.0 | | 3.5 | | 3.5 | | 2.5 | |

The results of Examples show that the thermally conductive filler in storage is suppressed in the thermally conductive compositions of the present invention (the first part and the second part) which satisfy the viscosity ratio ($\eta1/\eta3$) of more than 8, and since the thermally conductive compositions have excellent compressibility, they can be handled well.

In particular, the comprehensive evaluation for Examples in which the compatibilizer (the hydrocarbon compound Y liquid at 25°C) was mixed was higher than that for Examples in which the compatibilizer was not mixed. Furthermore, since the compound used as the compatibilizer is a hydrocarbon compound, generation of low molecular weight siloxane can be suppressed compared to the method for reducing viscosity using silicone oil or the like.

By contrast, in Comparative Example 1, in which fumed silica was used without using structural viscosity imparting agent, the viscosity ratio ($\eta1/\eta3$) was as small as 3.8 to 3.9, and the comprehensive evaluation based on the results of the evaluation of suppression of settle down and the results of the evaluation of compressibility was worse than those in all Examples.

Reference Signs List

10    Battery module
11    Battery cell
12    Battery module housing (module housing)
13    Spacer

**Claims**

1.  A thermally conductive composition comprising a liquid polymer, a thermally conductive filler and a structural viscosity imparting agent, the thermally conductive composition having a viscosity ratio ($\eta1/\eta3$) between a viscosity $\eta1$ measured by a rheometer under conditions of a measurement temperature of 25°C and a shear rate of 0.00158 (1/s) and a viscosity $\eta3$ measured by a rheometer under conditions of a measurement temperature of 25°C and a shear rate of 0.0501 (1/s) of more than 8.

2.  The thermally conductive composition according to claim 1, wherein the liquid polymer is organopolysiloxane.

3.  The thermally conductive composition according to claim 1 or 2, wherein the liquid polymer is an addition reaction-curable silicone.

4.  The thermally conductive composition according to claim 1, wherein the liquid polymer is alkenyl group-containing organopolysiloxane.

5.  The thermally conductive composition according to claim 1, wherein the liquid polymer is hydrogen organopolysiloxane.

6.  The thermally conductive composition according to any of claims 1 to 5, wherein the structural viscosity imparting agent is a hydrocarbon compound that is solid at 25°C.

7.  The thermally conductive composition according to any of claims 1 to 6, wherein the structural viscosity imparting agent is a hydrocarbon compound having a melting point of more than 25°C and 120°C or less.

8.  The thermally conductive composition according to any of claims 1 to 7, wherein a content of the structural viscosity imparting agent is 0.5 to 20 parts by mass based on 100 parts by mass of the liquid polymer.

9.  The thermally conductive composition according to any of claims 1 to 8, further comprising a compatibilizer.

10. The thermally conductive composition according to claim 9, wherein the compatibilizer is a hydrocarbon compound that is liquid at 25°C.

11. The thermally conductive composition according to claim 10, wherein the hydrocarbon compound that is liquid at 25°C is a mixture of saturated hydrocarbons having 10 to 50 carbon atoms.

12. A two-part curable thermally conductive material comprising: a first part comprising the thermally conductive composition according to claim 4, and a second part comprising the thermally conductive composition according to claim 5.

13. A supply form of a thermally conductive composition, comprising a container filled with the thermally conductive composition according to any of claims 1 to 11.

14. A supply form of a two-part curable thermally conductive material, comprising: a first container filled with a first part comprising the thermally conductive composition according to claim 4, and a second container filled with a second part comprising the thermally conductive composition according to claim 5.

15. The supply form of a thermally conductive composition according to claim 13,
wherein the supply form is used in such a manner that the thermally conductive composition is supplied to an application apparatus from the container.

16. The supply form of a two-part curable thermally conductive material according to claim 14, wherein the supply form is used in such a manner that the thermally conductive composition is supplied to an application apparatus from the container.

17. A thermally conductive member prepared by curing the thermally conductive composition according to any of claims 1 to 11, or the two-part curable thermally conductive material according to claim 12.

18. A battery module comprising: a spacer comprising the thermally conductive member according to claim 17; a plurality of battery cells; and a module housing that houses the plurality of battery cells, wherein the spacer is arranged in the module housing.

19. A method for producing a supply form of a thermally conductive composition, the method comprising performing:

a step of preparing a mixture comprising a liquid polymer, a thermally conductive filler and a structural viscosity imparting agent;
a step of heating the mixture; and
a step of cooling the mixture to adjust a viscosity ratio ($\eta 1/\eta 3$) between a viscosity $\eta 1$ measured by a rheometer under conditions of a measurement temperature of 25°C and a shear rate of 0.00158 (1/s) and a viscosity $\eta 3$ measured by a rheometer under conditions of a measurement temperature of 25°C and a shear rate of 0.0501 (1/s) to more than 8.

Fig. 1

Fig. 2

## INTERNATIONAL SEARCH REPORT

| International application No. |
| --- |
| **PCT/JP2023/011639** |

### A. CLASSIFICATION OF SUBJECT MATTER

*C09K 5/14*(2006.01)i; *C08K 3/01*(2018.01)i; *C08K 5/01*(2006.01)i; *C08L 83/04*(2006.01)i; *C08L 101/00*(2006.01)i; *C09K 5/10*(2006.01)i

FI: C09K5/14 E; C08K3/01; C08K5/01; C08L83/04; C08L101/00; C09K5/10 E

According to International Patent Classification (IPC) or to both national classification and IPC

### B. FIELDS SEARCHED

Minimum documentation searched (classification system followed by classification symbols)

09K5/00-5/20; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2020/095902 A1 (SEKISUI POLYMATECH CO., LTD.) 14 May 2020 (2020-05-14)<br>claims 1-16 | 1-19 |
| A | WO 2016/140020 A1 (SHIN-ETSU CHEMICAL CO., LTD.) 09 September 2016 (2016-09-09)<br>claims 1-4 | 1-19 |
| A | WO 2006/132253 A1 (NIHON HANDA CO., LTD.) 14 December 2006 (2006-12-14)<br>claims 1-12 | 1-19 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/011639** |

| Patent document cited in search report | Publication date (day/month/year) | Patent family member(s) | Publication date (day/month/year) |
| --- | --- | --- | --- |
| WO 2020/095902 A1 | 14 May 2020 | US 2021/0371660 A1 claims 1-16<br>JP 2021-80472 A<br>EP 3878911 A1<br>CN 112955506 A<br>KR 10-2021-0088568 A<br>TW 202024257 A | |
| WO 2016/140020 A1 | 09 September 2016 | US 2018/0022977 A1 claims 1-6<br>CN 107406678 A<br>KR 10-2017-0127482 A<br>TW 201632588 A | |
| WO 2006/132253 A1 | 14 December 2006 | TW 200708615 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018173860 A
- JP 2012007057 A